# EUROPEAN PATENT SPECIFICATION

(11) **EP 2 812 156 B1**
(45) Date of publication and mention of the grant of the patent: **08.06.2016**
(21) Application number: 13705519.0
(22) Date of filing: 01.02.2013
(51) Int. Cl.: B25B 29/02, B23P 19/06

(54) **PRETENSIONING TOOL AND METHOD FOR TIGHTENING A NUT**
VOR SPANNWERKZEUG UND VERFAHREN ZUM ANZIEHEN EINER MUTTER
OUTIL DE PRÉCONTRAINTE ET PROCÉDÉ POUR SERRER UN ÉCROU

(30) Priority: 09.02.2012 FI 20125142
(43) Date of publication of application: 17.12.2014
(73) Proprietor: Wärtsilä Finland Oy, 65380 Vaasa (FI)
(72) Inventor: MÄENPÄÄ, Juho, FI-66450 Jakkula (FI); HUHTA, Tero, FI-65320 Vaasa (FI)
(74) Representative: Berggren Oy Ab
(86) International application number: PCT/FI2013/050108
(87) International publication number: WO 2013/117807

(56) References cited:
- WO-A2-2006/105931
- US-A- 5 257 207
- US-A1- 2009 013 518

## Description

### Technical field of the invention

The present invention relates to a pretensioning tool for stud bolts, as defined in the preamble of claim 1. The invention also concerns a method for tightening a nut of a stud bolt assembly by using a pretensioning tool according to the invention.

### Background of the invention

Small stud bolts, which are used for clamping two or more parts together, are usually tightened by applying a tightening torque to a threaded nut that is arranged around the stud bolt and rests against a surface of one of the parts that are clamped by the stud bolts. However, because of the friction between the threads of the nut and the stud bolt and between the nut and the surface against which the nut is rotated, it is difficult to control precisely the axial force transmitted to the stud bolt. In addition, torsional residual stress is introduced into the stud bolt, and therefore oversize stud bolts need to be used. Because of these problems, pretensioning of stud bolts is often used when large stud bolts are tightened or when accurate control of the tensioning force is needed. Different hydraulic tools are available for the pretensioning of stud bolts.

A typical hydraulic pretensioning tool comprises a body that is arranged against one of the parts that are clamped by the stud bolts. The tool further comprises some kind of gripping means, which can be engaged with the free end of the stud bolt. The tool is also provided with one or more hydraulic cylinders. When hydraulic fluid is introduced into the hydraulic cylinders, the gripping means is moved in the axial direction of the stud bolt, and the stud bolt is thus tensioned. A nut can then be tightened around the stud bolt by using only a small torque, either manually or by using a motorized device for rotating the nut. When pressure is released from the hydraulic cylinders, the tension of the stud bolt is proportional to the extension of the stud bolt. In order to be able to apply the correct pretensioning to the stud bolt, it is necessary to measure the extension of the stud bolt. Different arrangements are known for measuring the extension of stud bolts. For instance, patent application document US 2004261583 A1 discloses a method for tightening bolts, in which method the extension of the bolts is determined indirectly by measuring the rotation angle of the nut. Patent application document US 2009013518 A1 discloses another method for measuring the extension of a bolt. In this method, an elongation sensor is arranged at the end of the bolt. A problem with the prior art pretensioning tools is that the extension of the stud bolt is either measured indirectly, or the measurement sensor is placed far from the actual pulling point, which leads to inaccurate measurement results.

### Summary of the invention

An object of the present invention is to provide an improved pretensioning tool for stud bolts. The pretensioning tool comprises a body, which body is supportable against a surface of a part that is clamped by the stud bolts, a gripping means for gripping a free end of a stud bolt, and at least one hydraulic cylinder comprising a piston that is connected to the gripping means for exerting a force on the gripping means in the axial direction of the stud bolt. The characterizing features of the pretensioning tool according to the present invention are given in the characterizing part of claim 1. Another object of the invention is to provide a method for tightening a nut of a stud bolt assembly by using a pretensioning tool according to the invention. The characterizing features of the method are given in the characterizing part of the other independent claim.

According to the invention, the gripping means comprises magnetic material, and the pretensioning tool comprises a sensor for measuring axial movement of said magnetic material.

The construction of the pretensioning tool according to the invention is very simple. Since the sensor can be placed in the lower part of the tool, accurate measurement results can be achieved. Since the magnetic material is placed in the gripping means, it is automatically set correctly in relation to the sensor when the tool is mounted.

According to an embodiment of the invention, the magnetic material is a piece of magnetic tape that is attached on the outer surface of the gripping means. According to another embodiment of the invention, the magnetic material is a magnetic sleeve that is arranged on the outer circumference of the gripping means.

According to an embodiment of the invention, the gripping means is a sleeve that is provided with internal threads.

According to another embodiment of the invention, the sensor is arranged in the body of the pretensioning tool at the same height with the gripping means.

In the method for tightening a nut of a stud bolt assembly, the nut is arranged around a free end of a stud bolt, the pretensioning tool is supported against a surface of a part that is clamped by the stud bolt, the gripping means of the pretensioning tool is engaged with the free end of the stud bolt, pressure in the hydraulic cylinder is raised to a preliminary level for eliminating play between the parts of the stud bolt assembly, measurement by the sensor is started after the elimination of the play, after starting the measurement, pressure in the hydraulic cylinder is raised to a level that is deemed to be needed for appropriate extension of the stud bolt, the extension of the stud bolt is measured for determining whether the extension is within the acceptable range, and if the extension of the stud bolt is within the acceptable range, the nut is tightened.

According to an embodiment of the invention, before removing the pretensioning tool, the tightening of the nut is checked by adjusting the pressure in the hydraulic cylinder to the preliminary level, measuring the extension of the stud bolt, and comparing the measured value to the value measured before tightening of the nut.

### Brief description of the drawings

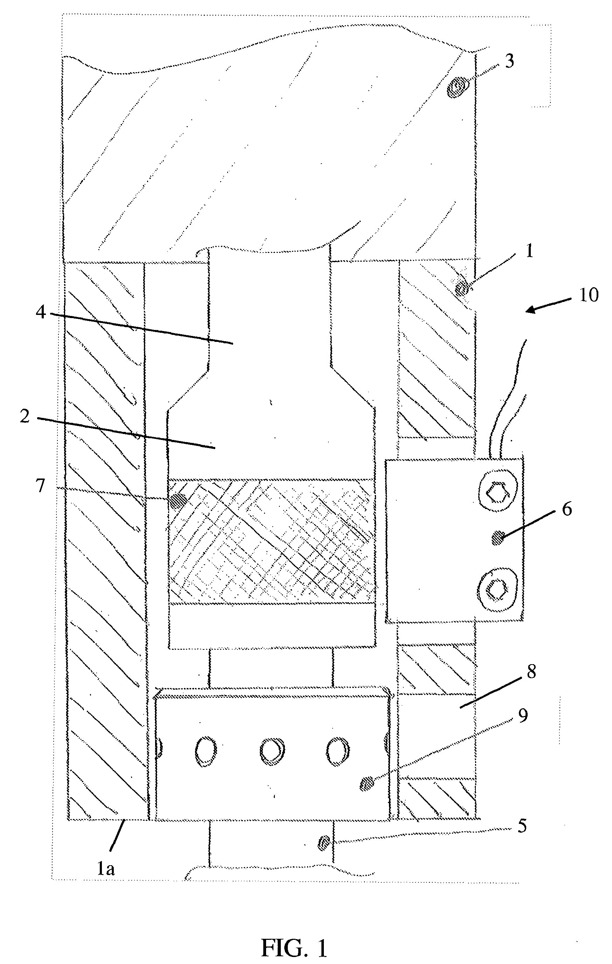

Fig. 1 shows a pretensioning tool according to an embodiment of the invention.

### Detailed description of the invention

Embodiments of the invention are now described in more detail with reference to the accompanying drawing.

In figure 1 is shown a pretensioning tool 10 according to an embodiment of the invention. The pretensioning tool 10 can be used for pretensioning stud bolts 5 that are used for clamping different parts, such as machine parts, together. The pretensioning tool 10 can be used especially in applications where big stud bolts are used and/or accurate tensioning of the stud bolts is needed. One particular use for the pretensioning tool 10 is cylinder heads of large internal combustion engines, such as main or auxiliary engines of ships or engines that are used at power plants for producing electricity. Each cylinder head of such an engine is usually fastened to the engine block with four stud bolts, and to prevent leakages between the cylinder liner and the cylinder head, it is important that the tension of the stud bolts is correct.

In figure 1 is shown only a small part of a stud bolt 5. A first end of the stud bolt 5 has been attached to a first part, such as the engine block of an internal combustion engine, by means of threads at the first end of the stud bolt 5. The pretensioning tool 10 comprises a body, which is supported against a surface of a second part, such as a cylinder head, which is clamped by the stud bolt 5 to the first part. In the embodiment of the figure, the body of the pretensioning tool 10 is a cylindrical collar 1, of which end surface 1a rests against a surface of the second part (not shown). However, the body of the pretensioning tool 10 could also have some other shape, and it is not necessary that the body is supported directly against the second part, but the pretensioning tool 10 can comprise support elements for arranging the tool 10 against a surface of a part that is clamped by the stud bolts 5. The pretensioning tool 10 further comprises a gripping means for gripping the free end of the stud bolt 5. In the embodiment shown in the figure, the gripping means is a sleeve 2 that is provided with internal threads. The threads of the sleeve 2 can be engaged with the threads at the free end of the stud bolt 5. The pretensioning tool 10 is also provided with a hydraulic cylinder 3. The hydraulic cylinder 3 comprises a piston 4 that is connected to the sleeve 2. When hydraulic fluid is introduced into the hydraulic cylinder 3, the piston 4 of the hydraulic cylinder 3 is moved, and it exerts a force on the sleeve 2 in the axial direction of the stud bolt 5. The force is directed away from the parts to be clamped for stretching the stud bolt 5. The pretensioning tool 10 could also comprise more than one hydraulic cylinder 3, and the hydraulic cylinders 3 could be arranged in a different manner than in the embodiment of the figure. The collar 1 of the pretensioning tool 10 comprises an aperture 8 for providing access to a nut 9 that is arranged at the end of the stud bolt 5. Through the aperture 8, the nut 9 can be rotated either manually or by using a tightening tool.

For measuring the extension of the stud bolt 5, the sleeve 2 of the pretensioning tool 10 comprises magnetic material and the pretensioning tool 10 is provided with a sensor 6 for measuring the movement of the magnetic material. In the embodiment of the figure, the magnetic material is a piece of magnetic tape 7 that is attached on the outer surface of the sleeve 2. The magnetic material could also be in a magnetic sleeve that is arranged around the outer circumference of the gripping sleeve 2. It is also possible that the gripping sleeve 2 is magnetized itself. The sensor 6 is attached to the collar 1 of the pretensioning tool 10 and arranged at the same height as the magnetic tape 7. The sensor 6 is capable of monitoring the position of the gripping means over the whole moving range of the sleeve 2. Since the magnetic tape 7 is arranged around the whole circumference of the sleeve 2, the position of the sleeve 2 can be measured even when the sleeve 2 is rotated. The pretensioning tool 10 is further provided with a control unit (not shown), which can be used for controlling the pressure of the hydraulic cylinder 3. The control unit can also display the extension of the stud bolt 5, and it can comprise different tightening and measurement procedures for different stud bolt assemblies.

The construction of the pretensioning tool 10 according to the invention is very simple. Since the sensor 6 is placed in the lower part of the tool 10, accurate measurement results can be achieved. Since the magnetic tape 7 is arranged around the sleeve 2 that is used for gripping the end of the stud bolt 5, the magnetic tape is automatically set correctly in relation to the sensor 6 when the pretensioning tool 10 is mounted.

The stud bolts 5 are tensioned in the manner described below. The parts to be clamped together are arranged against each other. Of course, the number of the parts can be more than two, for instance if a stack of plates are attached to each other. Next, one end of the stud bolt 5 is attached to a first part by means of the threads at the first end of the stud bolt 5. Alternatively, the stud bolt 5 can be provided with a bolt head at the first end, or a nut can be arranged around the first end of the stud bolt 5. Then, a nut 9 is arranged at the second end of the stud bolt 5. The nut 9 is rotated by using only a small torque so that the nut 9 rests against a surface of a second part. The pretensioning tool 10 is then arranged around the second end of the stud bolt 5. The end surface 1a of the collar 1 is arranged against the surface of the second part, and the sleeve 2 is rotated around the second end of the stud bolt 5 so that a sufficient portion of the threads of the sleeve 2 is engaged with the threads of the stud bolt 5. When the sleeve 2 has been attached to the stud bolt 5, hydraulic fluid is introduced into the hydraulic cylinder 3 for moving the piston 4. At first, the pressure in the hydraulic cylinder 3 is raised to a preliminary level for eliminating play between the parts of the stud bolt assembly. The preliminary pressure can be, for instance, 20-30 percent of the pressure that is needed for the desired extension of the stud bolt 5. After eliminating the play, measurement by the sensor 6 is started and the pressure in the hydraulic cylinder 3 is raised to the level that is deemed to be needed for the appropriate extension of the stud bolt 5. The piston 4 pulls the sleeve 2 and stretches the stud bolt 5. The sensor 6 measures the position of the sleeve 2 by means of detecting the movement of the magnetic tape 7. The extension of the stud bolt 5 is measured, and it is determined whether the extension is within the acceptable range. The hydraulic pressure in the hydraulic cylinder 3 is maintained until the nut 9 has been rotated to the correct position. The nut 9 is rotated by using a small predetermined torque. When the nut 9 has been rotated against the surface of the second part, the pressure is released from the hydraulic cylinder 3.

After tightening of the nut 9, the pretensioning tool 10 can be used for checking whether the nut 9 has been correctly tightened. This is done by raising the pressure in the hydraulic cylinder 3 again to the preliminary level and comparing the measurement result of the sensor 6 to the value that was measured before tightening the nut 9. Alternatively, the pressure is lowered directly from the full pressure to the preliminary pressure. If the deviation between the measured extension values is small enough, it can be concluded that the nut 9 has been correctly tightened. The pretensioning tool 10 can then be removed.

It will be appreciated by a person skilled in the art that the invention is not limited to the embodiments described above, but may vary within the scope of the appended claims.

## Claims

1. A pretensioning tool (10) for stud bolts (5), which pretensioning tool (10) comprises a body (1), which body (1) is supportable against a surface of a part that is clamped by the stud bolts (5), a gripping means (2) for gripping a free end of a stud bolt (5), and at least one hydraulic cylinder (3) comprising a piston (4) that is connected to the gripping means (2) for exerting a force on the gripping means (2) in the axial direction of the stud bolt (5), **characterized in that** the gripping means (2) comprises magnetic material, and the pretensioning tool (10) comprises a sensor (6) for measuring axial movement of said magnetic material.

2. A pretensioning tool (10) according to claim 1, **characterized in that** the magnetic material is a piece of magnetic tape (7) that is attached on the outer surface of the gripping means (2).

3. A pretensioning tool (10) according to claim 1, **characterized in that** the magnetic material is a magnetic sleeve that is arranged on the outer circumference of the gripping means (2).

4. A pretensioning tool (10) according to any of claims 1-3, **characterized in that** the gripping means (2) is a sleeve (2) that is provided with internal threads.

5. A pretensioning tool (10) according to any of the preceding claims, **characterized in that** the sensor (6) is arranged in the body (1) of the pretensioning tool (10) at the same height with the gripping means (2).

6. A method for tightening a nut (9) of a stud bolt assembly by using a pretensioning tool (10) according to any of the preceding claims, **characterized in that** method comprises the following steps:
- the nut (9) is arranged around a free end of a stud bolt (5),
- the pretensioning tool (10) is supported against a surface of a part that is clamped by the stud bolt (5),
- the gripping means (2) of the pretensioning tool (10) is engaged with the free end of the stud bolt (5),
- pressure in the hydraulic cylinder (3) is raised to a preliminary level for eliminating play between the parts of the stud bolt assembly,
- measurement by the sensor (6) is started after the elimination of the play,
- after starting the measurement, pressure in the hydraulic cylinder (3) is raised to a level that is deemed to be needed for appropriate extension of the stud bolt (5),
- the extension of the stud bolt (5) is measured for determining whether the extension is within the acceptable range, and
- if the extension of the stud bolt (5) is within the acceptable range, the nut (9) is tightened.

7. A method according to claim 6, **characterized in that** before removing the pretensioning tool (10), the tightening of the nut (9) is checked by adjusting the pressure in the hydraulic cylinder (3) to the preliminary level, measuring the extension of the stud bolt (5), and comparing the measured value to the value measured before tightening of the nut (9).

## Patentansprüche

1. Vorspannwerkzeug (10) für Stiftschrauben (5), wobei das Vorspannwerkzeug (10) einen Körper (1) umfasst und der Körper (1) gegen eine Fläche eines Teils abstützbar ist, der durch die Stiftschrauben (5) eingespannt wird, ein Greifmittel (2), um ein freies Ende einer Stiftschraube (5) zu greifen, und mindestens einen Hydraulikzylinder (3), der einen Kolben (4) umfasst, der mit dem Greifmittel (2) zum Ausüben einer Kraft auf das Greifmittel (2) in der Achsenrichtung der Stiftschraube (5) verbunden ist, **dadurch gekennzeichnet, dass** das Greifmittel (2) Magnetwerkstoff umfasst und das Vorspannwerkzeug (10) einen Sensor (6) zum Messen einer Axialbewegung des Magnetwerkstoffs umfasst.

2. Vorspannwerkzeug (10) nach Anspruch 1, **dadurch gekennzeichnet, dass** der Magnetwerkstoff ein Magnetbandstück (7) ist, das auf der Außenfläche des Greifmittels (2) befestigt ist.

3. Vorspannwerkzeug (10) nach Anspruch 1, **dadurch gekennzeichnet, dass** der Magnetwerkstoff eine Magnethülse ist, die auf dem äußeren Umfang des Greifmittels (2) angeordnet ist.

4. Vorspannwerkzeug (10) nach einem der Ansprüche 1 bis 3, **dadurch gekennzeichnet, dass** das Greifmittel (2) eine Hülse (2) ist, die mit Innengewinden versehen ist.

5. Vorspannwerkzeug (10) nach einem der vorstehenden Ansprüche, **dadurch gekennzeichnet, dass** der Sensor (6) in dem Körper (1) des Vorspannwerkzeugs (10) auf der gleichen Höhe wie das Greifmittel (2) angeordnet ist.

6. Verfahren zum Anziehen einer Mutter (9) einer Schraubverbindung unter Verwendung eines Vorspannwerkzeugs (10) nach einem der vorstehenden Ansprüche, **dadurch gekennzeichnet, dass** das Verfahren die folgenden Schritte umfasst:
- die Mutter (9) wird um ein freies Ende einer Stiftschraube (5) angeordnet,
- das Vorspannwerkzeug (10) wird gegen eine Fläche eines Teils abgestützt, der durch die Stiftschraube (5) eingespannt ist,
- das Greifmittel (2) des Vorspannwerkzeugs (10) wird mit dem freien Ende der Stiftschraube (5) in Eingriff gebracht,
- der Druck im Hydraulikzylinder (3) wird auf ein vorläufiges Niveau zum Eliminieren des Spiels zwischen den Teilen der Schraubverbindung erhöht,
- das Messen durch den Sensor (6) wird nach Eliminieren des Spiels gestartet,
- nach dem Starten des Messens wird der Druck in dem Hydraulikzylinder (3) auf ein Niveau erhöht, das für die geeignete Verlängerung der Stiftschraube (5) als notwendig erachtet wird, und die Verlängerung der Stiftschraube (5) wird gemessen, um zu bestimmen, ob die Verlängerung innerhalb des akzeptablen Bereichs ist, und
- wenn die Verlängerung der Stiftschraube (5) innerhalb des akzeptablen Bereichs ist, wird die Mutter (9) angezogen.

7. Verfahren nach Anspruch 6, **dadurch gekennzeichnet, dass** vor dem Entfernen des Vorspannwerkzeugs (10) das Anziehen der Mutter (9) durch Anpassen des Drucks im Hydraulikzylinder (3) auf das vorläufige Niveau, das Messen der Verlängerung der Stiftschraube (5) und das Vergleichen des gemessenen Wertes mit dem Wert, der vor dem Anziehen der Mutter (9) gemessen wurde, geprüft wird.

## Revendications

1. Outil de précontrainte (10) pour des goujons filetés (5), lequel outil de précontrainte (10) comprend un corps (1), lequel corps (1) peut prendre appui sur une surface d'une pièce qui est serrée par les goujons filetés (5), un moyen de saisie (2) pour saisir une extrémité libre d'un goujon fileté (5), et au moins un vérin hydraulique (3) comprenant un piston (4) qui est relié au moyen de saisie (2) pour exercer une force sur le moyen de saisie (2) dans la direction axiale du goujon fileté (5), **caractérisé en ce que** le moyen de saisie (2) comprend un matériau magnétique, et l'outil de précontrainte (10) comprenant un capteur (6) pour mesurer un mouvement axial dudit matériau magnétique.

2. Outil de précontrainte (10) selon la revendication 1, **caractérisé en ce que** le matériau magnétique est un morceau de bande magnétique (7) qui est fixé sur la surface extérieure du moyen de saisie (2).

3. Outil de précontrainte (10) selon la revendication 1, **caractérisé en ce que** le matériau magnétique est une douille magnétique qui est disposée sur la circonférence extérieure du moyen de saisie (2).

4. Outil de précontrainte (10) selon l'une quelconque des revendications 1-3, **caractérisé en ce que** le moyen de saisie (2) est une douille (2) qui est dotée de filets internes.

5. Outil de précontrainte (10) selon l'une quelconque des revendications précédentes, **caractérisé en ce que** le capteur (6) est disposé dans le corps (1) de l'outil de précontrainte (10) à la même hauteur avec le moyen de saisie (2).

6. Procédé pour serrer un écrou (9) d'un assemblage à goujons filetés en utilisant un outil de précontrainte (10) selon l'une quelconque des revendications précédentes, **caractérisé en ce que** le procédé comprend les étapes suivantes :
- l'écrou (9) est disposé autour d'une extrémité libre d'un goujon fileté (5),
- l'outil de précontrainte (10) est en appui contre une surface d'une pièce qui est serrée par le goujon fileté (5),
- le moyen de saisie (2) de l'outil de précontrainte (10) est en prise avec l'extrémité libre du goujon fileté (5),
- la pression dans le vérin hydraulique (3) est élevée à un niveau préliminaire pour éliminer un jeu entre les pièces de l'assemblage à goujons filetés,
- la mesure par le capteur (6) étant lancée après l'élimination du jeu,
- après avoir démarré la mesure, la pression dans le vérin hydraulique (3) étant élevée à un niveau qui est jugé nécessaire pour une extension appropriée du goujon fileté (5),
- l'extension du goujon fileté (5) étant mesurée pour déterminer si l'extension est dans les limites de la plage acceptable, et
- si l'extension du goujon fileté (5) est dans les limites de la plage acceptable, l'écrou (9) étant serré.

7. Procédé selon la revendication 6, **caractérisé en ce que**, avant d'enlever l'outil de précontrainte (10), le serrage de l'écrou (9) est vérifié en ajustant la pression dans le vérin hydraulique (3) au niveau préliminaire, en mesurant l'extension du goujon fileté (5) et en comparant la valeur mesurée avec la valeur mesurée avant le serrage de l'écrou (9).
